# EUROPEAN PATENT SPECIFICATION

(11) **EP 2 233 850 B1**
(45) Date of publication and mention of the grant of the patent: **10.04.2019**
(21) Application number: 09154665.5
(22) Date of filing: 09.03.2009
(51) Int. Cl.: F24F 13/02, F16L 25/00

(54) **Coupling system comprising a ribbed hose, packing and channel piece**
Verbindungssystem, das einen gerippten Schlauch, eine Dichtung und ein Kanalstück umfasst
Système de couplage comportant un tuyau à cannelures, emballage et pièce de canal

(43) Date of publication of application: 29.09.2010
(73) Proprietor: Ubbink B.V., 6984 AA Doesburg (NL)
(72) Inventor: ter Horst, Klaas, 7692 AH, Mariënberg (NL); Wessels, Arnoldus C., 9717 CM, Groningen (NL)
(74) Representative: Nederlandsch Octrooibureau

(56) References cited:
- EP-A- 0 376 691
- NL-C2- 1 004 115
- US-A- 3 958 818
- US-B1- 6 767 280
- US-B1- 7 393 021

## Description

### TECHNICAL FIELD OF THE INVENTION

The invention relates to a coupling system for coupling a ribbed hose to a channel part, in particular a coupling system for use in an air ventilation, heating and cooling system. The invention further relates to a coupling piece and accessory part for use in a coupling system and to a method for coupling a ribbed hose to a channel part.

### BACKGROUND OF THE INVENTION

Air ventilation, heating and cooling systems are widely used in buildings. In this case, flexible hoses are coupled to for example an air distribution system, a right-angle bend, T-shaped piece, Y-shaped piece, air channel end piece and other channel parts, also known as accessory parts. It is important that the coupling be such that no false air passes along the coupling between the flexible hose and the accessory part. Furthermore, it is important that an installer can make, by simple operations, the coupling between a flexible hose and accessory part (plug and play). Document NL1004115 is the closest prior art to the subject-matter of claim 1 and discloses its preamble.

### SUMMARY OF THE INVENTION

The object of the invention is to provide an improved coupling system for coupling a hose to a channel part.

According to the invention, this object is achieved by a coupling system having the features of Claim 1. Advantageous embodiments and further ways of carrying out the invention may be attained by the measure mentioned in the dependent claims.

The coupling system according to the invention comprises a ribbed hose, a channel part and a coupling piece for coupling the ribbed hose to the channel part and is furthermore characterized in that the channel part is configured for placing at least a portion of the coupling piece in the channel part. The coupling piece has an opening for placing the ribbed hose, the coupling piece having a first shape-retaining part and a second shape-retaining part with therebetween a resilient part, the first shape-retaining part and the resilient part being configured to grant the ribbed hose access into the second shape-retaining part, channel part, the first shape retaining part and the second shape retaining part having in cross section an opening which is larger than the outer circumference of the hose and the resilient part being configured to form a seal between the ribbed hose and the channel pan, the resilient part having an opening through the resilient part being smaller than the outer circumference of the hose.

The invention is based on the finding that it is important for the making of an airtight plug-and-play seal that a seal between the hose and the channel part is securely in place after connection. This means that the seal around the outer edge of the hose and inside the channel part makes contact with the wall. This cannot be seen in existing systems because the seal is located somewhere in the channel part. Once the hose has been placed in the channel part, the seal can no longer be seen and if the hose is not placed sufficiently far in the channel part, then false air can be drawn. Furthermore, it is possible for the seal to become displaced during placing of the hose in the channel part, as a result of which there can be no good seal. The coupling piece according to the invention prevents this kind of problems because the installer first places the coupling piece on the end of the hose. As a result, he can see whether the hose is slid sufficiently far into the coupling piece and the seal between the coupling piece and hose is good. Subsequently, he places the hose, provided with the coupling piece, in the channel part. If the flexible part sits in the channel piece, he knows that a good seal has been produced between the coupling piece and channel part and there is a good airtight seal/coupling between the hose and the channel part.

One embodiment is characterized in that the second shape-retaining part comprises fixing means for fixing the ribbed hose in the coupling piece. The fixing means are fixed in this case after one or more of the ribs. This has the advantage that once the hose has been placed in the coupling piece, the hose no longer becomes automatically detached from the coupling piece and the airtight seal remains ensured.

One embodiment is characterized in that the first shape-retaining part comprises fixing means configured for fixing the coupling piece to the channel part. Another embodiment is characterized in that the channel part comprises fixing means configured for fixing the coupling piece to the channel part. A further embodiment is characterized in that the fixing means of the coupling piece and the fixing means of the channel part interact with each other. The aforementioned embodiments have the advantage that once the coupling piece has been placed in the channel part, the installer knows that a good airtight coupling has been made and the coupling will not, as a result of any tensions which are applied or become applied to the hose, detach the coupling piece from the channel part, as a result of which an air leak is produced in the coupling.

One embodiment is characterized in that the channel part has a point-symmetrical opening for placing the coupling piece. The flexible part of the coupling piece has a corresponding circumference. This has the advantage that the coupling piece can be placed in two ways in the channel part.

One embodiment is characterized in that a cross section of the ribbed hose has a substantially flat side and, opposing this, a substantially curved side. A hose having the aforementioned features has the advantage that it has less of a tendency to roll over a flat surface. Furthermore, the curved side ensures that the hose is sturdier, as a result of which it becomes dented less rapidly when for example someone steps onto the unprotected hose or places an object thereon.

One embodiment is characterized in that the second shape-retaining part comprises an air flow guide configured for guiding an air flow through the coupling system, an outermost edge of the air flow guide corresponding to the opening of the channel part. This feature ensures that the transition from the hose flow opening to the flow opening of the channel, which have a different flow opening, proceeds gradually. As a result, less turbulence occurs in the air channel and the air system is quieter.

One embodiment is characterized in that the coupling system further comprises an air flow restriction member for restricting the flow opening and increasing the air flow resistance of the coupling system. An advantageous embodiment is characterized in that the air flow restriction member is fastened to the outermost edge of the air flow guide. The flow rate of each channel which is connected to a collection/distribution point depends on the flow resistance of the channel. This can often be regulated using an end piece. The resistance of the hose is substantially proportional to the length of the channel through the hose and the number of bends and the rounding thereof. With the aid of the air flow restriction member, it is possible to regulate the flow rate per connected channel and to adjust it in the system.

One embodiment is characterized in that the coupling piece is manufactured with one injection mould. An advantageous embodiment is characterized in that the coupling piece is manufactured with the aid of a two-component injection-moulding process. As a result, the coupling piece can be manufactured in a simple and inexpensive manner.

One aspect of the invention is to provide an improved coupling member for coupling a duct to a channel part having the features of a coupling piece according to one of the preceding embodiments.

Another aspect of the invention is to provide an accessory part for use in a coupling system having the features of a channel part according to one of the preceding embodiments.

A further aspect of the invention is to provide an improved method for coupling a ribbed hose to a channel part. The method includes the following steps:
- providing a coupling piece, wherein the coupling piece has an opening for placing the ribbed hose, the coupling piece has a first shape-retaining part and a second shape-retaining part with a resilient part therebetween, the first shape-retaining part and the resilient part being configured to grant the ribbed hose access into the second shape-retaining part, and the resilient part being configured to form a seal between the ribbed hose and the channel part;
- placing an end of the ribbed hose in the coupling piece, and
- placing the coupling piece in the channel part.

It will be clear that the various aspects mentioned in this patent application may be combined and may each be considered separately for a divisional patent application.

### BRIEF DESCRIPTION OF THE FIGURES

These and other aspects, properties and advantages of the invention will be explained hereinafter based on the following description with reference to the drawings, wherein like reference numerals denote like or comparable parts, and in which:
Figure 1 is a schematic view of two possible couplings of an embodiment of a coupling system according to the invention; and
Figure 2 shows an example of a coupling member and an air flow restriction member.

### DESCRIPTION OF EMBODIMENTS

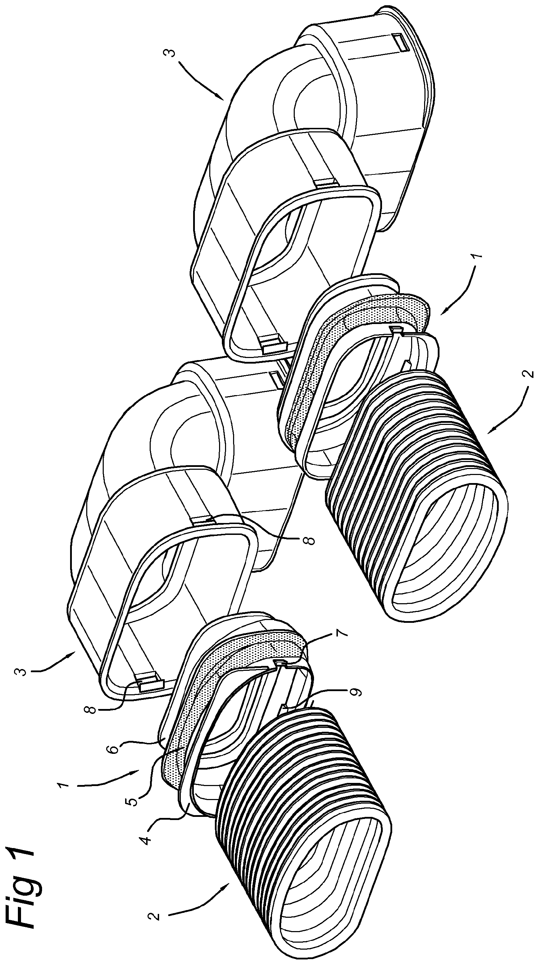

Figure 1 is a schematic view of two possible couplings of an embodiment of a coupling system according to the invention. A coupling system of this type is very usable in an air ventilation, heating and cooling system to regulate the climate in a building.

The coupling system according to the invention consists of a ribbed hose 2, a channel part 3; and a coupling piece 1 for coupling the ribbed hose to the channel part. The term "ribbed hose" refers to a flexible hose or duct through which air can be displaced. The ribs in the hose allow the hose to be bent and to cause it to cover any desired distance. The term "channel part" refers to an auxiliary piece for use in an air-conditioning system, for example a right-angle bend, T-shaped piece, Y-shaped piece, cross piece, end piece or end grate to which ducts can be fastened. The term "channel" also refers to an air distribution/collection unit to which a plurality of ducts can be connected. In general, it may be stated that the term "channel part" refers to each element in a system that is coupled to the end of a duct.

The coupling piece according to the invention consists of a combination of a first shape-retaining part 4, a second shape-retaining part 6 with a resilient part 5 therebetween. The resilient part 5 is configured for producing a seal between the hose 2 and the channel part 3. The resilient part 5 is annular and has in cross section an opening having a shape corresponding to the outer circumference of a cross section of the hose 2. In order to provide a good seal, the opening through the resilient part 5 is smaller than the outer circumference of the hose 2. Furthermore, the resilient part 5 has in cross section an outer circumference having a shape corresponding to a cross section of an opening in the channel part 3 for placing the coupling piece 1. In order to provide a good seal, the outer circumference of the resilient part 5 is larger than the opening in the channel part 3. In both cases, the resilient part 5 ensures that the hose 2 and the channel part 3 are joined together at least in a clamping manner. As a result, it is possible to place the hose 2 in the coupling piece 1 and to place the coupling piece 1 in the channel part 2.

The first shape-retaining part 4 has in cross section an opening which is larger than the outer circumference of the hose 2. Preferably, the shape of the opening corresponds substantially to the shape of the hose 2. Furthermore, the first shape-retaining part 4 has at least a portion which, viewed from the resilient part in cross section, has a circumference which is smaller than the opening in the channel part 3.

The second shape-retaining part 6 has, viewed at least partly in cross section from the resilient part 5, an opening which is larger than the outer circumference of the hose 2. Preferably, the shape of the opening corresponds substantially to the shape of the hose 2. Furthermore, the second shape-retaining part 6 has in cross section an outer circumference which is smaller than the opening in the channel part 3. The aforementioned features allow the hose to be inserted sufficiently far into the coupling piece as to pass through the first shape-retaining part 4, through resilient part 5, and at least partly through the second shape-retaining part 6. This produces a good seal between the hose 2 and coupling piece 1. Furthermore, the coupling piece 1 can be inserted into the channel part sufficiently far that even now the flexible part provides a good seal.

Furthermore, preferably both the first and the second shape-retaining part 4, 6 comprise an end stop. The end stop or the second shape-retaining part 6 ensures that the hose cannot be inserted through coupling piece 1, as a result of which the end of the hose 2 protrudes through the coupling piece. The end stop on the first shape-retaining part 4 ensures that the coupling does not completely disappear in the channel part 3 during placement.

The second shape-retaining part 6 has a plurality of fixing means 9 for fixing the ribbed hose 2 in the coupling piece 1. In the embodiment shown, the fixing means are cams placed around the opening. The cams engage with a ridge after a rib of the hose 2 and thus fix the hose in the coupling piece 1. A characteristic feature is that the hose 2 is fixed only once it has been inserted through the resilient part. Other fixing means are conceivable wherein the hose 2 is detachably connected to the coupling piece 1, for example with lips which can be bent manually outward, as a result of which the hose 2 returns slidably to the coupling piece.

The first shape-retaining part also has fixing means 7 for fixing the coupling piece 1 to the channel part 3. Furthermore, the channel part has corresponding fixing means 8 which, in interaction with the fixing means 7 of the coupling piece, are configured for fixing the coupling piece 1 to the channel part 3. In the embodiment shown, the fixing means 8 of the channel part 3 is an opening at the edge of the channel part 3 wherein the fixing means 7 of the coupling piece 1 falls. Instead of an opening, the fixing means 8 can also be a groove inside the channel part 3. The fixing means 7, 8, 9 shown are all of the snap seal type.

The channel part has a point-symmetrical opening for placing the coupling piece. In combination with the illustrated hose having a cross section having a substantially flat side and, opposing this, a substantially curved side, this has the advantage that a coupling can be produced in two ways between the ribbed hose 2 and the channel part 3.

The coupling piece according to the invention is preferably made with one injection mould using a 2-component injection-moulding process. The term "2-component injection-moulding process" refers to an injection-moulding process wherein there are injected into one mould a plurality of components having various properties, which then jointly form one product. According to the invention, the most important properties of the materials are the shape-retaining and resilient property at temperatures at which the coupling piece is used. Other properties may be the density, colour, rigidity, etc. It is thus possible for the first shape-retaining part 4 to be made using a different material from that of the second shape-retaining part 6 so that at least three components are used for manufacturing the coupling piece 1. The resilient part 5 is for example made of a thermoplastic elastomer (TPE). The shape-retaining parts 4, 6 are for example made of a polypropylene (PP). It is however also possible to obtain a coupling piece according to the invention by gluing or by fusing the three parts to one another.

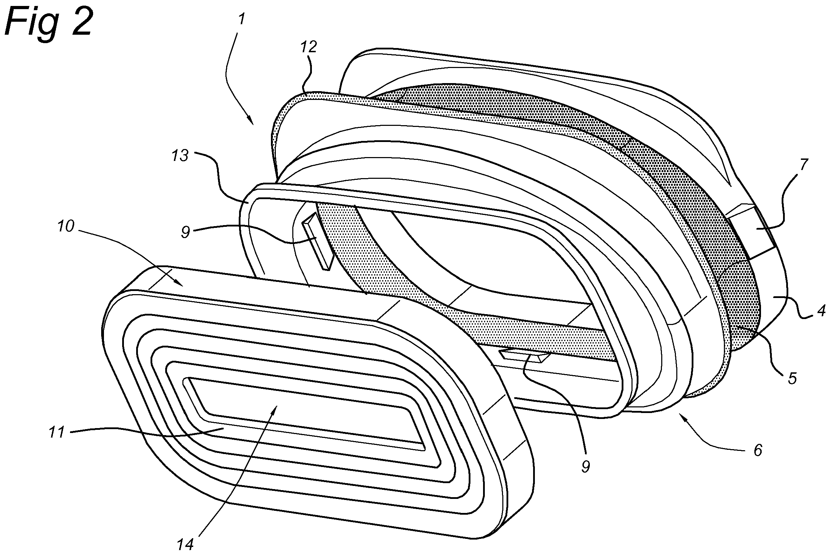

Figure 2 reveals that the second shape-retaining part 6 comprises an air flow guide configured for guiding an air flow through the coupling system. An outermost edge 13 of the air flow guide corresponds to the opening of the channel part. As a result, the flow of air through the coupling piece is adapted to the shape of the cross section of both the hose 2 and the channel part 3, so that less air noise is produced in the coupling system, as a result of which the final system is quieter.

Figure 2 also shows an air flow restriction member 10 for restricting the flow opening and increasing the air flow resistance of the coupling system. The air flow restriction member 10 is fastened to the outermost tooth of the air flow guide. The opening 14 of the air flow restriction member 10 corresponds in terms of shape to a cross section of the channel part 3, which is in the present embodiment rectangular. Furthermore, the air flow restriction member is provided with grooves allowing the opening 14 to be increased in size if desired and the flow rate through the connected hose to be regulated. Figure 2 reveals that four encircling elements or strips 11 can be removed. This is possible by means of cutting or breaking-out.

In the embodiments described hereinbefore, use has been made of a ribbed hose. The coupling according to the invention can also be used in a ribbed duct which is straight and rigid. In order to make a secure coupling, it is important that the duct be provided on its outside with grooves or notches which, when they are to interact with the fixing means 9, fix the duct to the coupling piece 1. It will also be clear that the invention is not limited to ducts having the shape shown. The advantage of the invention is also attained with round, oval and otherwise-shaped ducts. As a result of the fact that the resilient part has an opening which corresponds in terms of shape to the duct but is at least smaller than the circumference of the duct, there is provided a good seal which is produced only once the duct penetrates into the second shape-retaining part 6. The same applies to the shape of the opening of the channel part 3.

The invention provides a reliable plug-and-play coupling system wherein the coupling provides packing functions such as producing a seal between the duct 2 and channel part 3, fixing the duct in the coupling piece, the possibility of placing a duct having a non-point-symmetrical cross section in two ways in the channel part, of guiding the air flow from the duct to the channel part regardless of how the duct is inserted in the channel part. Furthermore, the coupling piece offers space for a volume flow regulator in the channels of the system. These volume flow regulators can be used in proximity to air distribution boxes with which the amount of air flowing to/from a space is influenced. This is desirable because one space requires more ventilation than the other. The passage of the volume flow is easy to increase by cutting out strips. A further advantage of the coupling is that tensile stress on the duct ensures that the resilient part bulges, as a result of which the coupling is further improved in terms of seal and strength.

The measures described hereinbefore for embodying a coupling system according to the invention can obviously be carried out separately or in parallel or in a different combination or if appropriate be supplemented with further measures; it will in this case be desirable for the implementation to depend on the field of application of the coupling system. The invention is not limited to the illustrated embodiments. Changes can be made without departing from the scope of the invetion as defined by the appended claims. Thus, the air flow restriction member can for example be an integral part of the second shape-retaining part, the member being provided with for example grooves for removing a portion of the air flow restriction member in a controlled manner in order to set the desired air flow resistance.

## Claims

1. Coupling system for an air ventilation, heating and cooling system , the coupling system comprising:
- a ribbed hose (2);
- a channel part (3); and
- a coupling piece (1) for coupling the ribbed hose to the channel part, wherein the channel part is configured for placing at least a portion of the coupling piece in the channel part; the coupling piece has an opening for placing the ribbed hose, **characterized in that** the coupling piece has a first shape-retaining part (4) and a second shape-retaining part (6) with a resilient part (5) therebetween, the first shape-retaining part and the resilient part being configured to grant the ribbed hose access into the second shape-retaining part, wherein the first shape retaining part (4) and the second shape retaining part have in cross section an opening which is larger than the outer circumference of the hose (2), and the resilient part being configured to form a seal between the ribbed hose and the channel part, the resilient part having an opening through the resilient part (5) being smaller than the outer circumference of the hose (2).

2. Coupling system according to claim 1, wherein the second shape-retaining part comprises fixing means (9) for fixing the ribbed hose in the coupling piece.

3. Coupling system according to one of the preceding claims, **characterized in that** the first shape-retaining part comprises fixing means (7) configured for fixing the coupling piece to the channel part.

4. Coupling system according to one of the preceding claims, **characterized in that** the channel part comprises fixing means (8) configured for fixing the coupling piece to the channel part.

5. Coupling system according to Claims 2 and 3, **characterized in that** the fixing means of the coupling piece and the fixing means of the channel part interact with each other.

6. Coupling system according to one of the preceding claims, **characterized in that** the channel part has a point-symmetrical opening for placing the coupling piece.

7. Coupling system according to one of the preceding claims, **characterized in that** a cross section of the ribbed hose has a substantially flat side and, opposing this, a substantially curved side.

8. Coupling system according to one of the preceding claims, **characterized in that** the second shape-retaining part comprises an air flow guide configured for guiding an air flow through the coupling system, an outermost edge (13) of the air flow guide corresponding to the opening of the channel part.

9. Coupling system according to one of the preceding claims, **characterized in that** the coupling system further comprises an air flow restriction member (10) for restricting the flow opening and increasing the air flow resistance of the coupling system.

10. Coupling system according to Claim 8, **characterized in that** the air flow restriction member (10) is fastened to the outermost tooth of the air flow guide.

11. Coupling system according to one of the preceding claims, **characterized in that** the coupling piece is manufactured with one injection mould.

12. Coupling system according to one of the preceding claims, **characterized in that** the coupling piece is manufactured with the aid of a two-component injection-moulding process.

13. Coupling member for coupling a duct to a channel part having the features of a coupling piece according to one of the preceding claims.

14. Accessory part for use in an air circulation system having the features of a channel part according to one of the preceding claims.

15. Method for coupling a ribbed hose to a channel part, including the following steps:
- providing a coupling piece, wherein the coupling piece has an opening for placing the ribbed hose, the coupling piece has a first shape-retaining part (4) and a second shape-retaining part (6) with a resilient part (5) therebetween, the first shape-retaining part and the resilient part being configured to grant the ribbed hose access into the second shape-retaining part, and the resilient part being configured to form a seal between the ribbed hose and the channel part;
the first shape retaining part (4) and the second shape retaining part (6) having in cross section an opening which is larger than the outer circumference of the hose (2) and the resilient part (5) being configured to form a seal between the ribbed hose and the channel pan, the resilient part (5) having an opening through the resilient part (5) being smaller than the outer circumference of the hose (2).
- placing an end of the ribbed hose in the coupling piece, and
- placing the coupling piece in the channel part.

## Patentansprüche

1. Verbindungssystem für ein Lüftungs-, Heiz- und Kühlsystem, wobei das Verbindungssystem umfasst:
- einen gerippten Schlauch (2);
- ein Kanalteil (3); und
- ein Verbindungsstück (1) zum Verbinden des gerippten Schlauchs mit dem Kanalteil,
wobei
das Kanalteil für das Platzieren mindestens eines Abschnitts des Verbindungsstücks in dem Kanalteil ausgestaltet ist; das Verbindungsstück eine Öffnung zum Platzieren des gerippten Schlauchs aufweist, **dadurch gekennzeichnet, dass** das Verbindungsstück einen ersten formbeständigen Teil (4) und einen zweiten formbeständigen Teil (6) mit einem elastischen Teil (5) dazwischen aufweist, der erste formbeständige Teil und der elastische Teil so ausgestaltet sind, dass sie dem gerippten Schlauch Zugang zu dem zweiten formbeständigen Teil gewähren, wobei
der erste formbeständige Teil (4) und der zweite formbeständige Teil im Querschnitt eine Öffnung aufweisen, die größer als der Außenumfang des Schlauchs (2) ist, und wobei der elastische Teil so ausgestaltet ist, dass er eine Dichtung zwischen dem gerippten Schlauch und dem Kanalteil bildet, der elastische Teil eine Öffnung durch den elastischen Teil (5) aufweist, die kleiner als der Außenumfang des Schlauchs (2) ist.

2. Verbindungssystem nach Anspruch 1, wobei der zweite formbeständige Teil Befestigungsmittel (9) zum Befestigen des gerippten Schlauchs in dem Verbindungsstück umfasst.

3. Verbindungssystem nach einem der vorangehenden Ansprüche, **dadurch gekennzeichnet, dass** der erste formbeständige Teil Befestigungsmittel (7) umfasst, die für das Befestigen des Verbindungsstücks an dem Kanalteil ausgestaltet sind.

4. Verbindungssystem nach einem der vorangehenden Ansprüche, **dadurch gekennzeichnet, dass** das Kanalteil Befestigungsmittel (8) umfasst, die für das Befestigen des Verbindungsstücks an dem Kanalteil ausgestaltet sind.

5. Verbindungssystem nach den Ansprüchen 2 und 3, **dadurch gekennzeichnet, dass** die Befestigungsmittel des Verbindungsstücks und die Befestigungsmittel des Kanalteils aufeinander einwirken.

6. Verbindungssystem nach einem der vorangehenden Ansprüche, **dadurch gekennzeichnet, dass** das Kanalteil eine punktsymmetrische Öffnung zum Platzieren des Verbindungsstücks aufweist.

7. Verbindungssystem nach einem der vorangehenden Ansprüche, **dadurch gekennzeichnet, dass** ein Querschnitt des gerippten Schlauchs eine im Wesentlichen flache Seite und, dieser gegenüberliegend, eine im Wesentlichen gekrümmte Seite aufweist.

8. Verbindungssystem nach einem der vorangehenden Ansprüche, **dadurch gekennzeichnet, dass** der zweite formbeständige Teil eine für das Führen einer Luftströmung durch das Verbindungssystem ausgestaltete Luftströmungsführung umfasst, wobei eine äußerste Kante (13) der Luftströmungsführung der Öffnung des Kanalteils entspricht.

9. Verbindungssystem nach einem der vorangehenden Ansprüche, **dadurch gekennzeichnet, dass** das Verbindungssystem ferner ein Luftströmungsbeschränkungsglied (10) zum Beschränken der Strömungsöffnung und Erhöhen des Luftströmungswiderstands des Verbindungssystems umfasst.

10. Verbindungssystem nach Anspruch 8, **dadurch gekennzeichnet, dass** das Luftströmungsbeschränkungsglied (10) an dem äußersten Zahn der Luftströmungsführung befestigt ist.

11. Verbindungssystem nach einem der vorangehenden Ansprüche, **dadurch gekennzeichnet, dass** das Verbindungsstück mit einem Spritzgießwerkzeug hergestellt ist.

12. Verbindungssystem nach einem der vorangehenden Ansprüche, **dadurch gekennzeichnet, dass** das Verbindungsstück mittels eines Zweikomponenten-Spritzgießprozesses hergestellt wird.

13. Verbindungsglied zum Verbinden einer Rohrleitung mit einem Kanalteil, aufweisend die Merkmale eines Verbindungsstücks nach einem der vorangehenden Ansprüche.

14. Zubehörteil zur Verwendung in einem Luftumlaufsystem, aufweisend die Merkmale eines Kanalteils nach einem der vorangehenden Ansprüche.

15. Verfahren zum Verbinden eines gerippten Schlauchs mit einem Kanalteil, einschließend die folgenden Schritte:
- Bereitstellen eines Verbindungsstücks, wobei das Verbindungsstück eine Öffnung zum Platzieren des gerippten Schlauchs aufweist, das Verbindungsstück einen ersten formbeständigen Teil (4) und einen zweiten formbeständigen Teil (6) mit einem elastischen Teil (5) dazwischen aufweist, wobei der erste formbeständige Teil und der elastische Teil so ausgestaltet sind, dass sie dem gerippten Schlauch Zugang zu dem zweiten formbeständigen Teil gewähren, und der elastische Teil so ausgestaltet ist, dass er eine Dichtung zwischen dem gerippten Schlauch und dem Kanalteil bildet;
wobei der erste formbeständige Teil (4) und der zweite formbeständige Teil (6) im Querschnitt eine Öffnung aufweisen, die größer als der Außenumfang des Schlauchs (2) ist, und der elastische Teil (5) so ausgestaltet ist, dass er eine Dichtung zwischen dem gerippten Schlauch und dem Kanalteil bildet, der elastische Teil (5) eine Öffnung durch den elastischen Teil (5) aufweist, die kleiner als der Außenumfang des Schlauchs (2) ist,
- Platzieren eines Endes des gerippten Schlauchs in dem Verbindungsstück und
- Platzieren des Verbindungsstücks in dem Kanalteil.

## Revendications

1. Système de couplage pour un système de ventilation, chauffage et refroidissement d'air, le système de couplage comprenant :
- un flexible nervuré (2) ;
- une partie de canal (3) ; et
- une pièce de couplage (1) pour coupler le flexible nervuré à la partie de canal,
dans lequel la partie de canal est configurée pour placer au moins une partie de la pièce de couplage dans la partie de canal ; la pièce de couplage a une ouverture pour placer le flexible nervuré, **caractérisé en ce que** la pièce de couplage ayant une première partie de retenue de forme (4) et une seconde partie de retenue de forme (6) avec une partie résiliente (5) entre celles-ci, la première partie de retenue de forme et la partie résiliente étant configurées pour autoriser le flexible nervuré à accéder à l'intérieur de la seconde partie souple, dans lequel la première partie de retenue de forme (4) et la seconde partie de retenue de forme ont en coupe transversale une ouverture qui est plus grande que la circonférence extérieure du flexible (2), et la partie résiliente étant configurée pour former un joint d'étanchéité entre le flexible nervuré et la partie de canal, la partie résiliente ayant une ouverture à travers la partie résiliente (5) étant plus petite que la circonférence extérieure du flexible (2).

2. Système de couplage selon la revendication 1, dans lequel la seconde partie de retenue de forme comprend des moyens de fixation (9) pour fixer le flexible nervuré dans la pièce de couplage.

3. Système de couplage selon l'une quelconque des revendications précédentes, **caractérisé en ce que** la première partie de retenue de forme comprend des moyens de fixation (7) configurés pour fixer la pièce de couplage à la partie de canal.

4. Système de couplage selon l'une quelconque des revendications précédentes, **caractérisé en ce que** la partie de canal comprend des moyens de fixation (8) configurés pour fixer la pièce de couplage à la partie de canal.

5. Système de couplage selon les Revendications 2 et 3, **caractérisé en ce que** les moyens de fixation de la pièce de couplage et les moyens de fixation de la partie de canal interagissent entre eux.

6. Système de couplage selon l'une quelconque des revendications précédentes, **caractérisé en ce que** la partie de canal a une ouverture en symétrie centrale pour mise en place de la pièce de couplage.

7. Système de couplage selon l'une quelconque des revendications précédentes, **caractérisé en ce qu'**une section transversale du flexible nervuré a un côté sensiblement plat et, opposé à ce dernier, un côté sensiblement incurvé.

8. Système de couplage selon l'une quelconque des revendications précédentes, **caractérisé en ce que** la seconde partie de retenue de forme comprend un guide de flux d'air configuré pour guider un flux d'air à travers le système de couplage, un bord le plus extérieur (13) du guide de flux d'air correspondant à l'ouverture de la partie de canal.

9. Système de couplage selon l'une quelconque des revendications précédentes, **caractérisé en ce que** le système de couplage comprend en outre un élément de restriction de flux d'air (10) pour restreindre l'ouverture de flux et augmenter la résistance de flux d'air du système de couplage.

10. Système de couplage selon la Revendication 8, **caractérisé en ce que** l'élément de restriction de flux d'air (10) est fixé à la dent la plus extérieure du guide de flux d'air.

11. Système de couplage selon l'une quelconque des revendications précédentes, **caractérisé en ce que** la pièce de couplage est fabriquée avec un moule à injection.

12. Système de couplage selon l'une quelconque des revendications précédentes, **caractérisé en ce que** la pièce de couplage est fabriquée avec l'aide d'un procédé de moulage par injection à deux composants.

13. Elément de couplage pour coupler un conduit à une partie de canal ayant les caractéristiques d'une pièce de couplage selon l'une quelconque des revendications précédentes.

14. Pièce accessoire à utiliser dans un système de circulation d'air ayant les caractéristiques d'une partie de canal selon l'une quelconque des revendications précédentes.

15. Procédé pour coupler un flexible nervuré à une partie de canal, comprenant les étapes consistant à :
- fournir une pièce de couplage, dans lequel la pièce de couplage a une ouverture pour mise en place du flexible nervuré, la pièce de couplage a une première partie de retenue de forme (4) et une seconde partie de retenue de forme (6) avec une partie résiliente (5) entre celles-ci, la première partie de retenue de forme et la partie résiliente étant configurées pour autoriser le flexible nervuré à accéder à l'intérieur de la seconde partie de retenue de forme, et la partie résiliente étant configurée pour former un joint d'étanchéité entre le flexible nervuré et la partie de canal ;
la première partie de retenue de forme (4) et la seconde partie de retenue de forme (6) ayant en section transversale une ouverture qui est plus grande que la circonférence extérieure du flexible (2) et la partie résiliente (5) étant configurée pour former un joint d'étanchéité entre le flexible nervuré et la partie de canal, la partie résiliente (5) ayant une ouverture à travers la partie résiliente (5) étant plus petite que la circonférence extérieure du flexible (2),
- placer une extrémité du flexible nervuré dans la pièce de couplage, et
- placer la pièce de couplage dans la partie de canal.
